# EUROPEAN PATENT SPECIFICATION

(11) **EP 3 529 633 B1**
(45) Date of publication and mention of the grant of the patent: **30.07.2025**
(21) Application number: 17781578.4
(22) Date of filing: 27.09.2017
(51) Int. Cl.: G01S 7/40, G01S 11/08

(54) **ENHANCED POSITIONING METHOD SUITABLE FOR LOW FREQUENCIES**
VERBESSERTES POSITIONIERUNGSVERFAHREN FÜR NIEDRIGE FREQUENZEN
PROCÉDÉ DE POSITIONNEMENT AMÉLIORÉ CONVENANT AUX BASSES FRÉQUENCES

(30) Priority: 18.10.2016 SE 1651365; 15.05.2017 SE 1750600
(43) Date of publication of application: 28.08.2019
(73) Proprietor: Nida Tech Sweden AB, 216 23 Malmö (SE)
(72) Inventor: DACKEFJORD, Håkan, 125 51 Älvsjö (SE); TAWS, Warwick, 168 34 Bromma (SE); WÅNGBERG, Fredrik, 184 51 Österskär (SE)
(74) Representative: Bergenstråhle & Partners AB
(86) International application number: PCT/SE2017/050940
(87) International publication number: WO 2018/074961

(56) References cited:
- US-B1- 6 571 089
- US-B1- 8 325 704

## Description

### Technical field

The present invention relates generally to a solution for measuring distance for radio signals in sub-GHz frequency bands and said solution in a positioning system.

### Background art

Ultra wideband radio (UWB) is commonly used for transmission of large amounts of information over short distances. The technology differs from other radio technologies in that no defined carrier wave is sent on a specific frequency. Instead showers of information are transmitted over a large frequency band, normally at least 500 MHz, enabling large amounts of information to be transmitted at the same time. This is advantageous for data communication, where the relatively high bandwidth enables high transmission speeds for data. Another advantage with UWB is that the short shower of information is transmitted in short pulses, as short as a billionth of a second, minimizing the power consumption for each information shower. The power consumption for such a pulse / information shower can be as low as one or a few milliwatts.

The drawback with UWB is that the range for transmissions with low power is very short, optimal distances ranging as little as 10 meters. The range for UWB communications can be extended but this requires the transmission power to be significantly increased. It is thereby a drawback with UWB that the range for low power signals is significantly shorter than for communication technologies allocated at lower frequencies. In addition, UWB is comparatively poor at penetrating building structures. The lower frequencies have other drawbacks such as less allocated bandwidth which limits the amount of data that can be sent. The lower bandwidth also disables the possibilities to use showers / pulses as in UWB.

Many countries have allocated frequency spectrums for UWB and the frequencies are for example in the United States defined to the spectrum within 3.1 to 10.6 GHz. UWB spreads the transmission energy over many hundreds or thousands of MHz typically between 3 GHz and 10 GHz which enables the very short pulses / showers, in the range of sub-nanosecond duration, to be transmitted from a sending node to a receiving node. As previously stated this is beneficial for data transmission but additionally enables accurate Time of Flight (ToF), Time of Arrival (ToA), Time Difference of Arrival (TDoA), round trip time (RTT) and other positioning/distance measurement techniques. In prior art UWB thereby has been used for distance measurements providing good results at short distances. The problem with for example TDoA and RTT over UWB is that the signal propagation makes the technique almost useless over distances exceeding the normal / optimal range of UWB.

Some prior art has disclosed solutions for correcting the reception time thus increase the accuracy of positioning. In US8325704B1 correcting a time of reception of a data packet is disclosed. A radio-frequency input is converted to a data-output signal. A data clock is recovered from the data-output signal. A phase offset is measured between the data-output signal and the data clock. A time of reception is corrected based at least in part on a timestamp. The timestamp is a sampled value of a counter at a time of reception of a data packet and the phase offset. The time correction can be used to calculate a distance estimate. The disadvantage of the solution in D1 is the correction is mainly based on a timestamp, it cannot determine whether come data is lost or not, and when some data is lost it cannot provide an accurate positioning,

US6571089B1 discloses a method and apparatus for moderating interference with impulse radio wireless control of an appliance; the control is effected by a controller remote from the appliance transmitting impulse radio digital control signals to the appliance. The control signals have a transmission power and a data rate. The method comprises the steps of: (a) in no particular order: (1) establishing a maximum acceptable noise value for a parameter relating to interfering signals; (2) establishing a frequency range for measuring the interfering signals; (b) measuring the parameter for the interference signals within the frequency range; and (c) when the parameter exceeds the maximum acceptable noise value, effecting an alteration of transmission of the control signals. The apparatus is for moderating interference with impulse radio wireless control of an appliance; the control being effected by a controller remote from the appliance, the controller transmitting impulse radio digital control signals to the appliance; the control signals having a transmission power and a data rate; the apparatus comprising: a threshold unit for establishing a maximum acceptable noise value for a parameter relating to interfering signals in a predetermined frequency range; and a measuring unit for measuring the parameter for the interference signals within the frequency range; and a transmission control unit for effecting alteration of the transmission of the control signals when the parameter exceeds the maximum acceptable noise value. However, the solution is applied in systems with UWB frequencies. The inaccuracy of positioning in systems with UHF radio signals is still not solved.

### Summary of invention

Positioning and/or distance measurements between two active nodes is normally conducted through starting a timer when the signal is transmitted from the first node and stop the timer as soon as it arrives at the second node. Another way is to measure the round trip time through allowing the signal to be transmitted back to the first node and stop the timer as soon as the signal arrives at the node. The second node is in such embodiments referred to as a device herein. The distance is calculated based on the lapsed time of the transmission. Different techniques can be used, such as ToA, ToF, TDoA, RTT, and other techniques known to the person skilled in the art. Such techniques have been utilized in UWB to achieve high accuracy measurements with good results at short distances.

The reason this has been successful and that good accuracy has been achieved is that the transmitted pulse in the UWB has a very steep leading edge on the RF energy in relation to the time curve. The node thereby looks for the arrival of the leading edge of the pulse and the timer is stopped at this point.

This solution works well with UWB and has during tests been very accurate at short distances. The reason the accuracy is good is that the leading edge of the signal is very distinct due to the high bandwidth that is used. It can be compared to a shower of information arriving at substantially the same time. However, there are problems with distance measurements at long range due to the aforementioned drawbacks of UWB. Distance measurements with UWB are therefore only useful at short distances and in so called line-of-sight signal propagation conditions. Large objects in the transmission path often disrupt the signal to the point of it becoming unusable. The signal propagation of the UWB frequencies are thereby not suitable for long distance measurements.

Signals in the sub-GHz frequencies are better suited for communication over long distances but the amount of information that can be transmitted is significantly reduced. The bandwidth for information to be transmitted is limited which makes the solution with large showers of information over a short time, as used in UWB, impossible to implement. The information instead has to be transmitted over time in much smaller amounts per time unit. This results in a leading edge of the signal being much more elongated than for the UWB solution. In addition, the signals can be reflected over much longer distances making it tricky to determine which signal that has chosen the shortest path and which signal that has traveled a longer distance than the actual distance between two nodes. This has the result that the accuracy for time of flight, time difference of arrival, and similar techniques is lost.

It is further known in prior art that the ability to determine the length differences of two radio paths is a function of the signal bandwidth. This can be mathematically explained via determining the relationship between the speed of light and bandwidth (Speed of light/bandwidth = X meters) to understand the accuracy of the measurement. This relation is frequently used for TDoA, RTT, and other positioning techniques. This will be further discussed in the detailed description.

Conducting calculations with the speed of light (299 792 458 m/s) and figures for different bandwidths shows the difference and problem present with sub-GHz frequencies. The required minimum distance for two different paths of a measurement to be placed in different periods of the signal is determined by the aforementioned formula and thereby also determines the theoretical minimum distance for the received signals to be differentiated from each other based on the leading edge as used in for example Time of Arrival and Time Difference of Arrival.

**Table 1**

| **Frequency band** | **Speed of light (m/s)** | **Signal bandwidth (Hz)** | **Accuracy (m)** |
|---|---|---|---|
| UWB at GHz level | 299 792 458 | 500 000 000 | 0,60 |
| UWB at GHz level | 299 792 458 | 2 000 000 000 | 0,15 |
| UHF at MHz level | 299 792 458 | 125 000 | 2398 |
| UHF at MHz level | 299 792 458 | 1 000 000 | 300 |

This makes accuracy for distance measurements and thereby also positioning at frequencies below 1000 MHz extremely difficult. The accuracy of a measurement in relation to Time Difference of Arrival and other techniques as mentioned herein will in prior art only work well if the nodes are further apart than the difference for a measurement to be located in different periods of the signal.

There are multiple reasons for this but the inventors have realized that for the lower signal frequency the leading edge is not as sharp as it is for UWB frequencies. For positioning and distance measurements this presents a significant issue in that positioning systems as known in the art are adapted for performing measurements on the arrival of a signal (Time of Arrival, Time Difference of Arrival, etc). With a relatively elongated leading edge the time determination for the arrival of the signal thereby isn't as good with UHF as it is when using for example UWB. It shall be noted that a few nanoseconds provides an error of many meters, for example a 10 meter error could in one embodiment be caused by a timing error of as little as 33 ns.

As previously discussed UWB is good for short distances and high accuracy but in the field of positioning it would be beneficial to provide accurate positioning with low power at long distances.

It shall further be noted that another issue relating to the problem of improving the accuracy in a distance measurement / positioning determination in UHF is that reflections of the signal create unwanted effects. This problem is present also for UWB when trying to achieve positioning for longer ranges, but in UWB the spreading of the energy over a large bandwidth substantially overcomes the problems caused by reflections.

It would thereby be beneficial to provide a solution wherein the accuracy of a UHF measurement can be increased.

It would further be beneficial to provide a solution wherein the range of positioning systems could be extended.

Thereby it is one object of the present solution to improve positioning solutions using radio signals located at a frequency below 1000 MHz, for example in a frequency range between 300 MHz and 1000 MHz. It shall however be noted that the enhanced solution as described herein also with good result can be implemented on other frequencies, such as 2,4 GHz, 5 GHz, or other suitable communication frequencies used for data and/or radio communication.

It is another object of the present solution to decrease the disturbing effects caused by signal reflections for signals used in a positioning system.

It is another object of the present solution to increase the accuracy of existing positioning systems.

It is another object of the present solution to increase the range of positioning systems.

It is another object of the present solution to significantly decrease the power consumption of positioning systems.

It is yet another object of the present solution to enable positioning of devices wherein the power consumption in the device is kept to a minimum.

Thus the present invention solves this by determining a distance with sub-GHz radio signals through receiving at least one data packet containing information about a radio output power used when the data packet was transmitted, wherein the data packet has a known structure, biasing the radio signal of the data packet using a first section of the data packet, comparing the data packet with the known structure of said data packet, determining a packet error rate based on the difference between the received data packet and the known structure of said data packet, adjusting the radio output power for a subsequent transmission, to minimize reflections of the radio signals, based on the information about the radio output power in the data packet and the determined packet error rate, and performing a distance calculation based on a second section of the data packet.

It is one advantage with the present solution that determining the time of flight, time difference of arrival, round trip time, etc, based on a second section of the data packet that has been biased with a first section of the data packet provides significant improvements in accuracy relating to the prior art. Through using the second section received with a biased radio receiver, or part of the second section, the determination of distance can be conducted with more consistency in the timing of the data packet.

The solution can be implemented in any form of positioning system and the data packet can for example be received in a node. The node can be either a receiving node or a node sending a packet to a second node or a device. The second node or device promptly returns the packet enabling the node to determine the distance based on for example a round trip time. In one embodiment the second node instead calculates the distance between the first and second node. It shall thereby be noted that in accordance with different embodiments of the solution the distance measurements can be conducted either through round trip time or by a so called one way measurement. Thereby the solution can be used both for one way calculations wherein the sending and receiving nodes are different but also for solutions wherein the RTT is measured.

For the purpose of this disclosure the terms *"device"* and *"node"* are used differently. Node and device are general terms but for the purpose of this description the node and device have in one embodiment been used to describe different sorts of units. The node is a base station, smart phone, router, computer, tablet, or any other form of device that has a battery power of some sort that the user may recharge. A device is a small device that the user doesn't intend to charge that often. The device can for example be a small tag or a standalone chip in a node. A node can further be any form of node adapted to both transmit, receive, and conduct distance calculations. Thereby a node can do all the aspects and embodiments of the solution as described herein. A device is in one embodiment a less complex node adapted to receive and transmit signals but not adapted to conduct the actual distance calculations. The device and the node may in one embodiment be exactly the same type of node/device constituted of the same component but with different purposes. The device is in one embodiment a battery powered device that is optimized for long battery life. The node can in different embodiments be battery powered or connected to the grid.

For the purpose of this description, a biased second section of the data packet means a section of the data packet received with a biased radio receiver, i.e. after the radio receiver was biased by a first section of the data packet.

According to one embodiment the signal strength of the data packet is measured at reception of said data packet.

According to one embodiment the distance calculation is selected from any one of Time of Flight, Time of Arrival, Time-Difference of Arrival, or Round Trip Time.

It is one advantage with the present solution that it can be implemented in many different forms of positioning technologies. The distance measurement can further be combined with angle of arrival in order to produce a position estimation or for multilateration and triangulation.

According to one embodiment the second section of the data packet is any one of the trailing edge of the data packet, the last 50% of the data packet, a selected stop bit within the last 50% of the data packet, and a control signal from the radio receiver that indicates the data packet has finished being received.

According to one embodiment the second section of the data packet is any one of the trailing edge of the data packet, the last 75% of the data packet, a selected stop bit within the last 75% of the data packet, and a control signal from the radio receiver that indicates the data packet has finished being received.

According to one embodiment the second section of the data packet is any one of the trailing edge of the data packet, the last 85% of the data packet, a selected stop bit within the last 85% of the data packet, and a control signal from the radio receiver that indicates the data packet has finished being received.

For different application areas and conditions different parts of the second section of the data packet can be used, this depends on how much of the packet that is required for sufficient biasing the radio receiver so the second section of the signal is optimized but also how much of the packet that shall be used for the distance determination. In one embodiment it is sufficient to use one byte for the distance determination, in another a few bits or even bytes are used to calculate the distance. It shall be noted that the embodiment as described above is an example embodiment and that any part of the second section of the data packet can be used. It is one advantage that the biased second section of the data packet enables that positioning can be conducted with great accuracy also when the radio signals used have frequencies below 1 GHz, for example between 300 MHz and 1000 MHz. It shall further be noted that the second section of the data packet doesn't have to be the last section, only located in the last 50%, and/or last 75%, of the data packet that arrives to the receiving node.

According to one embodiment the received data packet has been transmitted with dynamic radio output power.

It is one advantage with the present solution that it is adapted to reduce the reflections of the radio signals used to determine the distance the radio signal has traveled. This is achieved through adjusting the output power when transmitting a packet. The output power is stored as information within the payload, or any other part of the data packet, and can thereby be used by the receiving node and/or device for future transmissions.

Multiple transmissions are conducted subsequent of each other with dynamically adjusted radio power output.

According to the present invention the packet error rate is relevant in relation to balancing the radio output power to an optimal rate. Through stabilizing the packet error rate around 5%, such as between 1-10% it has been shown through tests conducted by the inventors that the reflections decrease significantly. It has further been shown that through stabilizing the packet error rate between 0-10% reflections decrease significantly. If the radio output power level is too low it will generate too many lost packets and if the output power level is too high it will generate too many radio frequency reflections. Too many radio frequency reflections create a severe multi-path environment where radio signals that have bounced off different objects and thereby traveled different lengths in the air is one of the largest source of errors in TDoA or ToF distance ranging.

As described herein, a known structure is a packet structure of the data packet that is previously known to both the sending and receiving end, i.e. both to the node and the device. Through knowing the packet structure, known structure, nodes and devices can compare what is received with the knowledge of what was transmitted to estimate or calculate a packet error rate. It shall be noted that the packet structure may comprise one or more variables that enables the nodes and devices to identify the packet. Such variables can for example be a counter value presenting which order the packets were sent in. Thereby it is possible to determine if a packet was lost.

Dynamic radio output power and determination of packet error rate are conducted both in the node and the device.

The packet error rate is determined based on how many bits that are in error between a received data packet and a predetermined known structure of the data packet. This can for example be done via an error correction scheme that compares the received data packet to how it should look. The solution as described herein is not limited to a single known structure of the data packet and different data packet structures can be present. It shall further be noted that the data packet in one embodiment may contain information that is embedded within the predetermined known data packet structure.

According to the present invention the data packet comprises information about the radio output power that was used when the data packet was transmitted, and the solution is adapted to:
- adjust the radio output power based on said information in the data packet.

According to one embodiment the radio output power is dynamically adjusted to achieve a packet error rate between 0% and 10%.

According to one embodiment the radio output power is dynamically adjusted to achieve a packet error rate between 1% and 10%.

According to one embodiment the radio output power is dynamically adjusted to achieve a packet error rate between 3% and 7%.

According to one embodiment the radio output power is dynamically adjusted to achieve a packet error rate of substantially 5%.

According to one embodiment the radio output power is dynamically adjusted to achieve a packet error rate of 5%.

**It** is one advantage with the present solution that the packet error rate is adjusted to a level wherein the reflections in relation to the loss of packets are optimized for the environment the signal travels in.

According to one embodiment gain control in a low noise amplifier is applied to the radio signal of the data packet.

According to one embodiment the data packet comprises a variable indicating a counter value and said counter value is an incremental value indicating the transmission order of multiple data packets.

According to the present invention the data packet is received as a radio signal at a frequency between 300 MHz and 1000 MHz.

Positioning within the frequency range between 300 MHz and 1000 MHz has previously been difficult to perform with sufficient accuracy. It is thereby one advantage with the present solution that the accuracy and range is significantly improved.

According to one embodiment the data packet is received as a radio signal at a frequency between 750 MHz and 950 MHz.

It shall however be noted that the solution can be implemented also for other frequencies, such as WiFi and Bluetooth frequencies.

According to one embodiment the incoming data packet payload contains the radio output power level from the sending node or device. For each received data packet, the receiving node or device can correlate the received signal strength with the transmitted radio output power level from the sender. In this way the receiving node can adjust the radio output power level in the next data packet to be transmitted back to the sender. This continuous process enables dynamic power control which reduces the radio reflections. The radio output power lever could for example be determined by establishing the data packet error rate.

According to one aspect a node is adapted to receive a data packet containing information about a radio output used when the data packet (3) was transmitted, wherein the data packet has a known structure and is received as sub-GHZ radio signals, wherein the node is adapted to bias the radio receiver using a first section of the data packet, compare the data packet with the known structure of said data packet, determine a packet error rate based on the difference between the received data packet and the known structure of said data packet and adjust the radio output power for a subsequent transmission, to minimize reflections of the radio signals, based on the information about the radio output power in the data packet and the determined packet error rate, and to calculate a travel distance for said data packet by using a second section of the data packet.

According to one embodiment the node is adapted to transmit a data packet to a device, start a timer based on any one of the trailing edge of the data packet, the last 75% of the data packet, a selected stop bit within the last 75% of the data packet, and a control or status signal from the radio receiver that indicates the data packet has finished being received receive the data packet from the device, bias the data packet using a first section of the data packet, stop the timer based on a second section of the data packet being any one of the trailing edge of the data packet, the last 75% of the data packet, a selected stop bit within the last 75% of the data packet, and a control signal from the radio receiver that indicates the data packet has finished being received and calculate the distance between the first and second node.

According to one embodiment the node is adapted to transmit a data packet to a device, start a timer based on any one of the trailing edge of the data packet, the last 50% of the data packet, and a selected stop bit within the last 50% of the data packet, receive the data packet from the device, bias the data packet using a first section of the data packet, stop the timer based on a second section of the data packet being any one of the trailing edge of the data packet, the last 50% of the data packet, a selected stop bit within the last 50% of the data packet, and a control signal from the radio receiver that indicates the data packet has finished being received and calculate the distance between the first and second node.

According to one embodiment the node is adapted to measure round trip time.

According to one embodiment the node is adapted to determine the distance to another node.

According to one embodiment the node is adapted to determine the position of another node and/or device.

According to one embodiment the node is adapted to determine the distance to a device.

According to one embodiment the energy in the signal is spread over a frequency spectrum that is as wide as possible.

**It** shall be noted that the frequency spectrum might be limited by physical properties, regulations, and/or the communication chip used.

According to the present invention the packet comprises a payload that contains the transmit power level from the sending node. For each received packet, the receiving node or device can correlate the received signal strength with the transmitted power level from the sending node. In this way the receiving node or device can adjust the power level in the next packet to be transmitted back to the sender.

**It** is one advantage with the present solution that dynamic power control can be achieved through a continuous process based on that the payload comprises information about the transmission power and that the receiving node or device can adjust the power of the following transmission.

According to one aspect, not being part of the present invention, a device is adapted to receive a data packet containing information about the radio output power, wherein the data packet is received as sub-GHZ radio signals and wherein a first section of the data packet is used to bias a radio receiver, and a second section of the data packet is used to calculate a travel distance for said data packet , wherein the device is adapted to determine the packet error rate, determine a return radio output power to achieve a packet error rate between 0% and 10%, and directly transmit said data packet back to the node.

According to one embodiment, not being part of the present invention, the device is adapted to send and receive a data packet as a radio signal at a frequency between 300 MHz and 1000 MHz.

According to one aspect, not being part of the present invention, a device is adapted to perform the steps:
- receive a data packet containing information about the radio output power,
- determine a packet error rate,
- determine a return radio output power to achieve a packet error rate between 0%
   and 10%, and
- transmit said data packet back to the node.

According to one embodiment, not being part of the present invention, the device is adapted determine a return radio output power to achieve a packet error rate between 1% and 10%.

According to one embodiment, not being part of the present invention, the device is adapted determine a return radio output power to achieve a packet error rate between 3% and 7%.

According to one embodiment, not being part of the present invention, the device is adapted determine a return radio output power to achieve a packet error rate of 5%.

According to one embodiment the node is adapted determine a return radio output power to achieve a packet error rate of 5%.

According to one embodiment the node is adapted determine a return radio output power to achieve a packet error rate between 1% and 10%.

According to one embodiment the node is adapted determine a return radio output power to achieve a packet error rate between 3% and 7%.

According to one embodiment the node is adapted to communicate the return radio output power to other nodes and devices within range.

According to one embodiment the nodes and devices receiving a communicated return radio output power are adapted to use the return radio output power for future transmissions of data packets.

According to one embodiment the first section of the data packet is used for biasing the radio receiver in order to remove the effects of DC offsets in the second section of the data packet. Through removing the effects of DC offsets a better accuracy can be achieved for distance measurements at sub-GHz frequencies, such as between 300 MHz and 1000 MHz.

In yet another embodiment a combination of the relation between the received signal strength associated with a data packet, the relation between the received signal strength associated with an average of multiple data packet, the relation between the received signal strength associated with multiple data packets, and the output power is used for adjusting the output power.

According to one embodiment, the parameter for adjusting the output power is the relation between the received signal strength associated with a data packet and the output power.

According to one the parameter for adjusting the output power is the relation between the received signal strength associated with an average of multiple data packets and the output power.

According to one the parameter for adjusting the output power is the relation between the received signal strength associated with multiple data packets and the output power.

According to one embodiment the payload used for distance calculations also comprises payload information.

It is one advantage with the present solution that the data packet in one embodiment can use the same packet for transmitting both information and conducting the positioning or distance measurement. This is beneficial in relation to reducing the power consumption of the solution further.

According to one embodiment wherein high reliability of information transfer is required, the payload information is transmitted on a separate channel optimized to minimize the packet error rate.

It is one advantage that the channel used for distance measurement and/or positioning in one embodiment deliberately is operated with some packet errors. Although the optimized packet error rate reduces the reliability of information transfer, the reliability of the distance calculation is, as described herein, improved. Thus, in different embodiments different payload information may be transmitted for distance calculation or as separate information.

The data payload is in one embodiment only one byte long but is a data payload that can be used both for distance calculations with for example ToF, ToA, TDoA, RTT, or similar and for carrying data one byte at a time. In one embodiment the distance calculations are conducted multiple time with different data transmitted in the payload each time.

It is one advantage with the present solution that the channel used for distance measurement isn't allocated during the transmission solely for distance measurement.

According to one embodiment the modulation of the RF signal is adapted to spread the RF energy over a frequency spectrum that is as wide as possible.

In most solutions for data communication the signal modulation is focused on reducing the spread of RF energy and occupying a frequency spectrum that is as possible. This improves data communication but isn't beneficial for distance measurements. It is thereby a further advantage that the data communication is improved through enabling that the payload can be used both for distance calculations and carrying data.

According to one embodiment the node is adapted to calculate a position of another node or device.

According to one embodiment the receiving node looks for a chosen stop bit in the data packet payload and stops a timer when the selected stop bit is received

According to one embodiment the receiving node stops a timer when an end of reception signal in the radio is activated.

According to one embodiment the node is adapted to:
- transmit a response request message,
- start a first timer at transmission of said response request message,
- receive a response to said response request message,
- stop the timer at reception of the response to said response request message, and
- determine based on the timer result the distance between said first and second node.

According to one embodiment the node is further adapted to start the timer when the stop bit leaves and stop the timer when the stop bit is received.

According to one embodiment the node decodes the received signal, demodulate the bits, finds the stop bit, and calculates the distance.

It is one advantage that proper biasing removes DC offsets in the signal. The DC offset has the undesirable effect of increasing the spread of results.

According to one embodiment a first node enters a distance measurement mode, the first node sends a message to a second node that it shall prepare for a distance measurement event, the first node sends a message to the second node to prepare for a distance measurement event, the second node acknowledge that it is prepared for a distance measurement event, the first node sends a packet, start a timer based on any one of the trailing edge of the data packet, the last 50% of the data packet, a selected stop bit within the last 50% of the data packet, and a signal indicating the end of packet transmission, the second node returns the data packet, the first node stops the timer based on any one of the trailing edge of the data packet, the last 50% of the data packet, a selected stop bit within the last 50% of the data packet, and a signal indicating the end of packet reception, and the first node determines the distance between the first and second node.

In one embodiment, the signal indicating an end of transmission or reception is a signal in the radio transceiver of a node or device wherein the radio transceiver indicates with a signal that the reception or transmission has been finished. Such signal can for example be a signal sent from a radio chip to the CPU of said node or device, a signal determined by the CPU, or a signal based on the received or transmitted radio signal.

According to one embodiment a first node enters a distance measurement mode, the first node sends a message to a second node that it shall prepare for a distance measurement event, the first node sends a message to the second node to prepare for a distance measurement event, the second node acknowledge that it is prepared for a distance measurement event, the first node sends a packet, start a timer based on any one of the trailing edge of the data packet, the last 75% of the data packet, a selected stop bit within the last 75% of the data packet, and a signal from the radio indicating the end of packet transmission, the second node returns the data packet, the first node stops the timer based on any one of the trailing edge of the data packet, the last 75% of the data packet, a selected stop bit within the last 75% of the data packet, and a signal from the radio indicating the end of packet reception, and the first node determines the distance between the first and second node.

According to one embodiment the second node waits in a distance measurement mode, the second node receives a packet and re-transmit said packet immediately.

According to one embodiment the packet error rate is optimized to a point wherein radio signal reflections are lost and data packets are received.

### Brief description of drawings

The invention is now described, by way of example, with reference to the accompanying drawings, in which:
Fig. 1 illustrates a data packet divided into a first and second section wherein the data packet has multiple parts.
Fig. 2 illustrates an indoor location with two nodes and a device.
Fig. 3a illustrates a sketch of a prior art distance measurement using a UWB frequency.
Fig. 3b illustrates a sketch of a prior art distance measurement using a UHF radio frequency signal.
Fig. 4 illustrates schematic diagram illustrating one embodiment of a distance measurement between a node and a device.
Fig. 5 illustrates a schematic diagram illustrating one embodiment of a distance measurement between a first and a second node.
Fig. 6 illustrates another embodiment of a data packet divided into a first and second section wherein the data packet has multiple parts.

### Description of embodiments

In the following, a detailed description of different embodiments of the node, device, method and, system is disclosed under reference to the accompanying drawings. All examples herein should be seen as part of the general description and are therefore possible to combine in any way of general terms. Individual features of the various embodiments and aspects may be combined or exchanged unless such combination or exchange is clearly contradictory to the overall function of the disclosed node, device, method, and/or system.

Briefly, the solution relates to a method and node used for distance measurement, especially distance measurement in a positioning system. The method and node relates to time measurements between two nodes and/or between a node and a device. The time measurement is conducted through for example Time of Flight, Time Difference of Arrival, Round-trip time, or any other form of time measurement relating to the traveling, or air time, of a radio signal. The solution is different from the prior art in that frequencies between 300 MHz and 1000 MHz can be used instead of frequencies traditionally used for such measurements without the drawbacks normally associated with such frequencies. The used frequencies enables that the solution achieves a significantly increased range without losing accuracy. In addition to providing increased range and accuracy the lower frequencies enable better penetration properties in indoor locations.

The solution further relates to biasing a radio receiver with a received radio signal to improve the timing characteristics of part of the data packet, herein called the second section of the data packet. The biasing is conducted to achieve signal properties with decreased DC offset and with properties enhancing the accuracy of distance measurements. The lack of a distinct leading edge for signals in the used frequency band is addressed through using a different part of the radio signal, namely the second section, to perform the distance measurement. The solution also relates to minimizing the reflections of the radio signals through balancing the output power and lost data packets to a rate that enhance the accuracy of distance measurements.

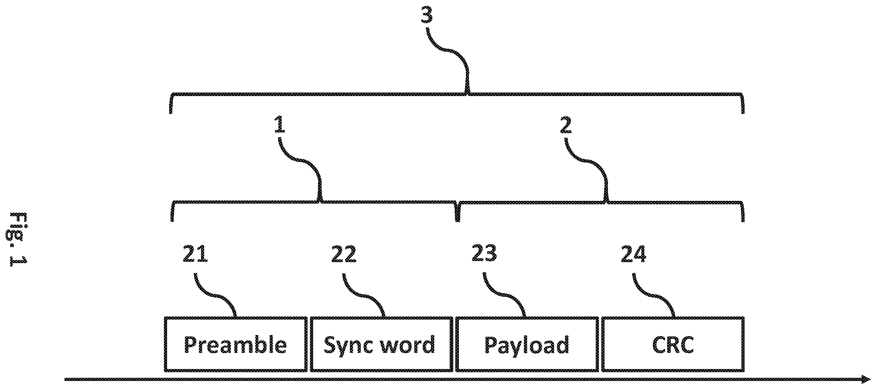

Figure 1 illustrates one embodiment of a data packet 3 containing a first section 1 and a second section 2. The data packet 3 can have different forms and length depending on how the solution is utilized. In one embodiment the data packet 3 can for example comprise different parts, such as a preamble 21, a sync word 22, a payload 23, and cyclic redundancy check (CRC) 24. The length of each of the aforementioned parts can for example be eight bytes each but any size or length is within the scope of the solution. Other examples are one byte each and one bit each.

In one embodiment the different parts, preamble 21, sync word 22, payload 23, and CRC 24 are of the same size, as in the embodiment as described above. In another embodiment the parts 21, 22, 23, 24 are of different size. In yet another embodiment the data packet 3 comprise a totally different number of parts, such as two, three, or five.

The data packet 3 contains a first 1 and a second 2 section that can comprise different parts 21, 22, 23, 24 of the data packet 3. The first 1 and second 2 sections are in one embodiment not clearly defined within the data packet 3 in the signal and can differ for different implementations of the same signal. The different sections 1, 2 are instead in such an embodiment determined based on the properties of the signal and the specific system in order to enable the biasing of the signal with the aim of reducing the effects of DC signal offsets in the second section 2. Thereby, the second section 2 is biased for enhancing distance measurements.

It shall further be noted that the radio signal may or may not have the same properties as signals of the prior art. However, the implementation of how the distance measurements is conducted is significantly different as described herein.

The first 1 and second sections 2 are not limited to the definition of the different parts 21, 22, 23, 24 as they are illustrated in figure 1. Figure 1 merely illustrates one possible embodiment of the solution. In one embodiment the first section 1 may contain the preamble 21, the sync word 22, and part of the payload 23 meanwhile the second section 2 contains the remaining part of the payload 23 and the CRC 24. In another embodiment the preamble 21 and sync word 22 constitutes the first section 1 and the payload 23 and CRC 24 constitutes the second section 2. It shall be noted that those examples are merely descriptions of embodiments relating to the solutions and that the solution may have many different embodiments based on the characteristics of the signal and the system.

The purpose of the first 1 and second section 2 as described herein is to distinguish between a section of the packet that arrives first at the receiver, i.e. the first section 1, and a section that arrives later at the receiver, i.e. the second section 2. The sections 1, 2 can be of different lengths and form and comprise different parts of the data packet 3 in different embodiments. The second section 2 could for example in one embodiment be only one stop bit, for example the last bit of the data packet 3.

In one embodiment the second section 2 isn't the entire last section of the data packet 3. The data packet 3 can thereby in one embodiment comprise a third section arriving to the receiving node after the second section 2. However, the second section 2 is always located within the last 50% of the data packet 3 and is used for the distance measurement. In some embodiments the second section 2 is located within the last 75% of the data packet 3. In one embodiment the second section 2 is a control or status signal from the radio receiver that indicates the data packet has finished being received.

In one embodiment as illustrated in figure 1 the payload 23 is located within the second section 2 of the data packet 3 and used for both the distance measurement and for carrying data information.

Figure 1 further illustrates a data packet 3 that comprises information about the output power used when the data packet 3 was transmitted. The information about the output power can for example be located in the payload 23 and used for adjusting the output power of any subsequent transmission. The parameter for adjusting the output power can for example be the relation between lost data packets and output power. According to the present invention the parameter for adjusting the output power is the relation between the error rate of the received data packets and the output power. In another embodiment, the parameter for adjusting the output power is the relation between the received signal strength associated with a data packet 3 and the output power.

Output power and radio output power are herein used as interchangeable terms and refers to the transmission power used by the radio chip.

Figure 1 illustrates one data packet 3, however according to the present invention multiple distance measurements are made with multiple data packets 3.

The information contained in the payload 23 can, in one embodiment wherein multiple data packets 3 are sent subsequent of each other, be divided between different data packets 3. Thereby information can be divided between the payload 23 of different data packets 3. However, even if the information is divided between data packets 3 a distance measurement can in one embodiment be conducted for every data packet 3.

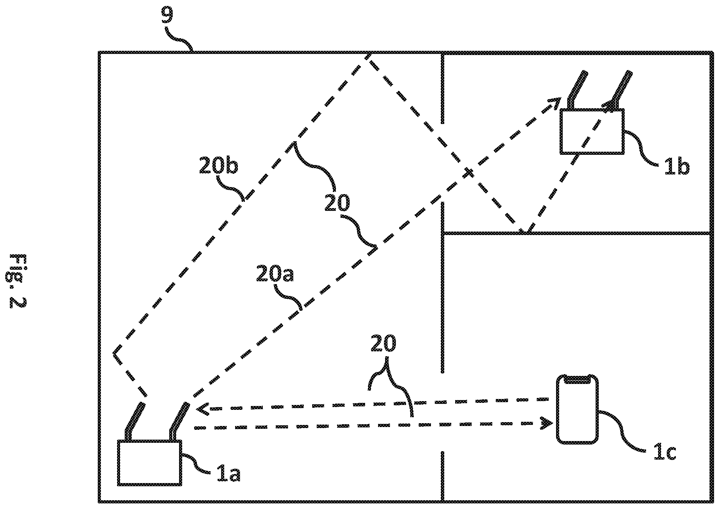

Figure 2 illustrates an example of an indoor location 9, such as an office, manufacturing area, storage, or any form of indoor area, comprising two nodes 1a, 1b, and a device 1c. As illustrated in figure 2 the first node 1a transmits a signal 20 to a second node 1b. The signal 20 can take different signal paths 20a, 20b to reach the second node 1b. In figure 2, two different signal paths 20a, 20b are illustrated wherein one is a direct signal path 20a and one is a reflected signal path 20b. The travel time and distance for the different signal paths 20a, 20b are different. The direct path 20a as illustrated in figure 2 is shorter than the reflected signal path 20b. For the receiving second node 1b this presents an issue in relation to determining the ToF, ToA, TDoA, or similar of the radio signal 20. This issue is discussed in relation to Table 1 of the description wherein the minimum distance difference for two measurements to end up in different periods of a signal is calculated in relation to different frequencies.

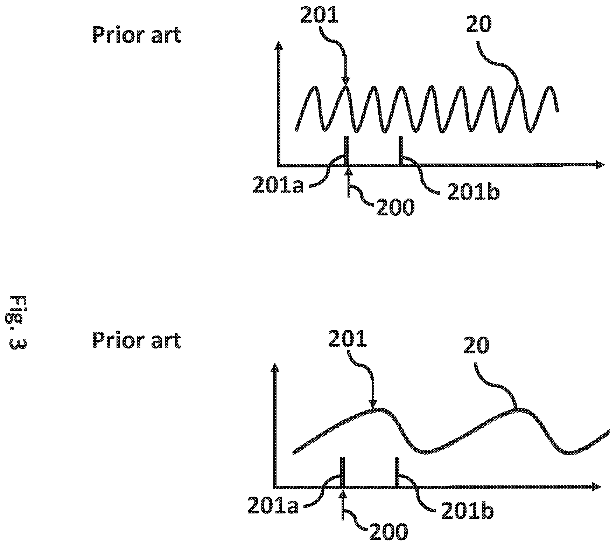

The reflected signal path 20b as illustrated in figure 2 would indicate that the first node 1a is located further away from the second node 1b than it actually is. This will further be discussed in relation to figure 3 below.

Figure 2 further illustrates another embodiment wherein a radio signal 20 is transmitted from the node 1a to a device 11. The device 11 is adapted to directly transmit the radio signal 20 back to the node 1a, i.e. in this embodiment the round-trip time is measured instead of a one-way determination. The embodiment as described above with multiple signal paths with reflections and direct paths are of course implementable also in this embodiment with the device 11.

Figure 3a and 3b illustrates one difference between systems with frequencies as traditionally used for distance determination and distance measurements with sub-GHz frequencies in the prior art. Figure 3a and 3b thereby illustrates one reason in an illustrative way why the accuracy for sub-GHz frequency distance measurements in prior art lacks accuracy.

Figure 3a illustrates a signal 20 in the UWB range and figure 3b illustrates a signal 20 in the UHF range. Both figure 3a and figure 3b illustrates an example that can be compared to what is seen in figure 2 with multiple signal paths 20a, 20b. The timing of the signal 20 when it arrived at the second node 1b (the receiving node) is marked with a first arrival marker 201a corresponding to the arrival of the direct signal path 20a and a second arrival marker 201b corresponding to the arrival of the reflected signal path 20b. For the UWB signal the direct signal path arrival 201a and the reflected signal path arrival 201b is recorded in different periods of the signal 20 and the reflected path arrival 201b can by the system be determined as a reflected path 20b and handled accordingly for the calculation of the distance between the first 1a and second 1b nodes. The arrival determination is thereby estimated to one arrival point 201 that is used to calculate the distance. The value that in theory would be considered to correspond to the real distance 200 between the first 1a and second 1b node is, as can be seen from figure 2, very close to the estimation 201. Thereby, a relatively accurate distance is calculated.

In figure 3b the signal 20 is instead transmitted at a UHF radio frequency. The arrival 201a, 201b of the direct signal path 20a and the reflected signal path 20b thereby is recorded in the same period of the signal 20. This provides an estimation 201 that relates to the period and which is quite different from the value that in theory would be considered to correspond to the real distance 200. Thereby the distance determination is not as accurate. See the real distance 200 in comparison to the estimated distance 201. This corresponds to and further explains the problem of the prior art as discussed in Table 1.

The problem that occurs in relation to what is explained in figure 3a and 3b is addressed by the present solution through using the first section 1 of the data packet 3 to bias the second section 2 of the data packet 3. Through biasing the radio receiver and thereby the signal 20 and selecting a stop bit, or stop section, or other part of the second section 2, the part of the signal that is used for the distance measurement can be significantly decreased and the distinctiveness of the used signal improved. This eliminates the problem, as previously discussed, with the elongated leading edge of the signal and thereby enables accurate distance measurement from signals in a frequency range between 300 MHz and 1000 MHz. However, it shall be noted that the solution herein also within the scope of the solution could be implemented in other frequency ranges.

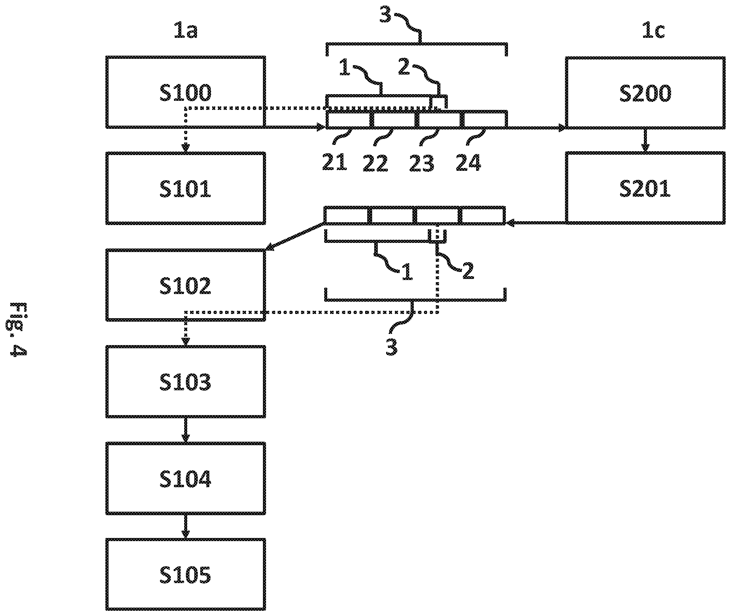

Figure 4 illustrates a schematic view of one distance measurement between a node 1a and a device 1c. The node 1a sends S100 a packet 3 to the device and start S101 a timer based on the second section 2 of the packet 3. The second section 2 is any one of the trailing edge of the data packet, the last 50% of the data packet, and a selected stop bit, or other part of the second section 2, within the last 50% of the data packet 3. The device 1c receives S200 the data packet 3 and directly returns S201 the data packet 3. The first node receives S102 the data packet 3 and bias S103 the second section 2 based on a first section 1 of the data packet 3 to use the second section 2 to stop S104 the timer. The time or amount of clock cycles from the timer is used to determine S105 the distance between the 1a and the device 1c.

Normally in data communication it is beneficial with modulation of the RF signal to achieve the most bandwidth-efficient use of the available spectrum. This usually means the signal modulation is focused on reducing the spread of RF energy and occupying as small a frequency spectrum as possible. When transmitting the data packet 3 as illustrated in figure 4 the RF signal energy is spread over a much wider frequency spectrum than in a normal data communication system in order to reduce the effect of reflections on the accuracy of the distance measurement.

Due to that data towards the front of the data packet 3, i.e. the first section 1 is used to bias the radio frequency signal in the receiver the timing errors by measuring ToF, TDoA, or similar at the second section 2 of the data packet 3 is reduced. The properly biased signal chain provides less variation in the reconstructed signal at the output of the receiver providing better accuracy. Thereby through measuring for example TDoA using the end of the data packet 3, not the start of the data packet 3, allows the receiver signal chain to be properly biased by the time the last bits of the (relatively short) data packet 3 is recovered. Proper biasing removes DC offsets in the signal, which otherwise have the undesirable effect of increasing the spread of results. Thereby the drawbacks of the prior art can be addressed and solved.

Figure 4 further illustrates how a node 1a transmits a fixed-length data packet 3. In one embodiment the node 1a transmits several fixed-length data packets 3, each for example one or a few bytes in length, consisting of modulated 1's and 0's, as common in wireless data communication system. The data packets 3 are each received and bias the radio receiver S202, and used for determination of the distance through utilizing the second section 2 of each data packet 3. This provides great accuracy in the timing result, because the data towards the front of the data packet 3 is used to bias the RF (radio frequency) signal chain in the receiver, and trying to measure timing when the receiver is not fully biased creates timing errors. This has for long been one of the main issues in prior art and has not been solved before. A properly biased signal chain provides less variation in the reconstructed signal at the output of the receiver and thereby better accuracy for distance measurements with sub-GHz radio signals.

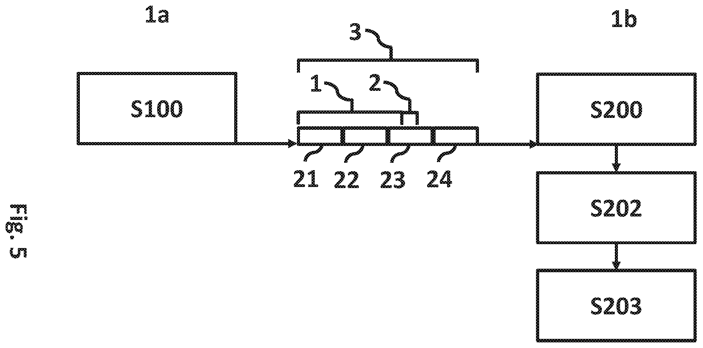

Figure 5 illustrates another embodiment wherein positioning is conducted in a second node 1b wherein a first node 1a sends S100 a data packet 3, the second node 1b receives S200 the data packet 3, bias S202 the radio receiver and thereby a second section 2 of the data packet 3 based on the first section 1. The second node 1b thereafter determines S203 a distance between the first 1a and second 1b node based on the biased second section 2 of the packet 3.

It shall be noted that the second section 2 can be any part of the data packet 3 that is subsequent the first section 1. There is no limitation to the length of the second section 2, neither is there any limitation to that the second section 2 has to be the last part of the data packet 3.

The embodiments as illustrated in figure 4 and 5 are example embodiments and can comprise further steps as previously disclosed herein.

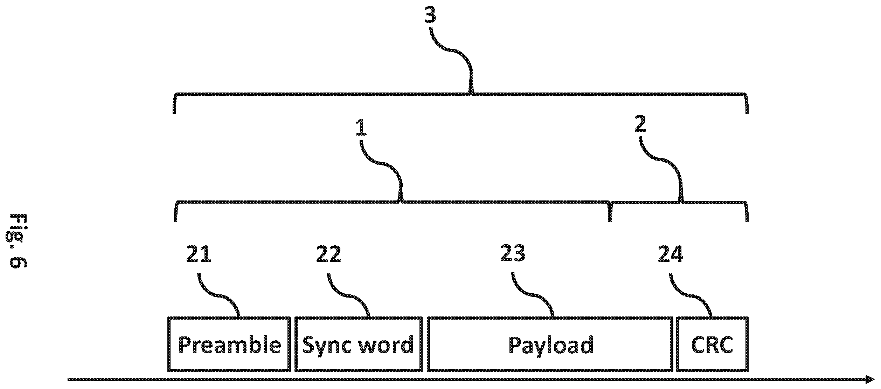

Figure 6 illustrates one embodiment of a data packet 3 containing a first section 1 and a second section 2. The data packet 3 can have different forms and length depending on how the solution is utilized. Figure 1 and figure 6 illustrates different embodiments of data packets 3. In one embodiment the data packet 3 can for example comprise different parts, such as a preamble 21, a sync word 22, a payload 23, and cyclic redundancy check (CRC) 24.

In one embodiment the different parts, preamble 21, sync word 22, payload 23, and CRC 24 are of different sizes, as in the embodiment as illustrated in figure 6. In another embodiment the parts 21, 22, 23, 24 are of the same size, see for example figure 1. In yet another embodiment the data packet 3 comprise a totally different number of parts, such as two, three, or five.

Figure 6 further illustrates how the second section 2 of the data packet 3 is located in the last 75% of the data packet 3. In different embodiments the second section 2 is located at different portions of the last portion of the data packet 3. In one embodiment the data packet 3 comprise a third section arriving after the second section 2.

To further describe embodiments of the solution both the radio output power and the bitrate are in one embodiment adjusted to optimize the radio signal. The aim is to achieve a preferred data packet error rate. The data packet error rate is preferably kept within one of the aforementioned intervals, also called a data packet error window, such as between 0% and 10%. If the packet error rate approaches one of the outer perimeters, such as 0% or 10%, of the data packet error window the radio output power is adjusted. The aim is to maintain a low packet error rate, low but sufficient transmission energy, and a low energy consumption. In one embodiment if the packet error rate approaches 10%, for example 9%, the system automatically increase the radio output power to reduce the packet error rate for the next transmitted data packet. However, the power can't be adjusted to an unlimited extent, instead at some point the system will reach a level where either the radio output power approaches zero or it approaches the maximum power that is allowed either by regulations or the system. For such events the bitrate can be adjusted instead.

In one embodiment the receiving end, which in this case can be either the node or the device, calculates the number of bits that are in error. This is the packet error rate and in on embodiment it is determined through comparing the received data packet with a known structure of the packet. By determining how many bits that are in error a percentage can be calculated. The data packet may further comprise information about the sequential number of the packet, i.e. in which order the data packets were sent.

The receiving end knows what to look for in the data packet and is thereby able to determine if a data packet was lost as well as the actual packet error rate. Through knowing the information about the transmission of the data packet, such as radio output power and bitrate, the next transmission, such as a re-transmission of the packet, is adjusted to fulfill the preferred requirements of saving power and maintaining a relatively low packet error rate.

According to the present invention the known packet structure is a general structure describing the data packet. It shall be noted that a known packet structure is not in any way limited to a data packet containing an exact set of bits. For example, a known packet structure may comprise unknown information such as data or an incremental value indicating the order the data packets was transmitted in. The known packet structure may further comprise information that changes, such as an indication of the radio output power disclosing for the receiving end which power and/or bitrate the data packet was transmitted with.

The aim is to always maintain the signal within the packet error rate window. In one embodiment this is solved thorough using different transmission profiles wherein for example Profile 1 is used at the best conditions. Profile 1 is the preferred profile and operate at the highest bitrate. The higher the bitrate the better the accuracy in for example time of flight measurements. In each profile the transmission can be conducted with different radio output powers. Profile 2 has a lower bitrate and thereby longer transmission distance. If a data packet is received with a packet error rate approaching the outer border of the packet error rate window and the system is in Profile 1 the system automatically switches to the next profile for the subsequent transmission sequence. The system may comprise additional profiles, such as a Profile 3 with an even lower bitrate. In one embodiment a profile is sets of channel conditions, such as bandwidth, bitrate, allowed ranges of radio output power, etc.

In one embodiment the bitrate is only altered for the next transmission sequence, wherein a transmission sequence is a separate distance measurement initiated by a user or a central processing unit for the purpose of conducting a new distance or positioning request. I.e. if multiple transmissions are made to enable better accuracy for the same distance or positioning request all of them shall constitute part of the same transmission sequence. However, the radio output power may change in a single transmission sequence.

It should further be noted that some packet error rates, i.e. some bits in error, is preferable. The solution as described herein minimize the strength of the RF-reflections through optimizing the bitrate and radio output power to levels wherein the data packets almost are lost. When the packets almost are lost the reflections are minimized since the strength of reflections, or many reflections, are too weak to reach the receiver.

## Claims

1. Method for determining a distance with sub-GHz radio signals comprising the steps:
- receiving at least one data packet (3) in a radio receiver, wherein the data packet (3) comprises information about a radio output power used when the data packet (3) was transmitted, wherein the data packet (3) has a known structure,
- biasing the radio receiver using a first section (1) of the data packet (3),
- comparing the data packet (3) with the known structure of said data packet (3),
- determining a packet error rate based on the difference between the received data packet (3) and the known structure of said data packet (3),
- adjusting the radio output power for a subsequent transmission, to minimize reflections of the radio signals, based on the information about the radio output power in the data packet (3) and the determined packet error rate, and
- perform a distance calculation based on a second section (2) of the data packet (3).

2. The method according to claim 1, wherein the signal strength of said data packet (3) is measured at reception.

3. The method according to any one of claims 1-2, wherein the radio output power for transmitting the data packet (3) is dynamically adjusted to achieve a packet error rate between 0% and 10%.

4. The method according to any one of claims 1-3, wherein gain control in a low noise amplifier is applied to the radio signal of the data packet (3).

5. The method according to any one of claims 1-4, wherein the data packet (3) is received as a radio signal at a frequency between 300 MHz and 1000 MHz.

6. The method according to any one of claims 1-5, wherein the data packet (3) comprises a variable indicating a counter value and said counter value is an incremental value indicating the transmission order of multiple data packets (3).

7. The method according to any one of claims 1-6, wherein the method further comprises the step:
- adjusting the bitrate if the radio output power is close to a predetermined threshold value.

8. The method according to any one of claims 1-7, wherein the second section (2) of the data packet (3) is any one of the trailing edge of the data packet (3), the last 50% of the data packet (3), the last 75% of the data packet (3), a selected stop bit within the last 50% of the data packet (3), a selected stop bit within the last 75% of the data packet (3), and a signal indicating the end of packet reception.

9. A node (1a; 1b) comprising a radio receiver adapted to receive a data packet (3) containing information about a radio output power used when the data packet (3) was transmitted, wherein the data packet (3) has a known structure and is received as sub-GHZ radio signals, wherein the node is adapted to bias the radio receiver using a first section (1) of the data packet (3), compare the data packet (3) with the known structure of said data packet (3), determine a packet error rate based on the difference between the received data packet (3) and the known structure of said data packet (3) and adjust the radio output power for a subsequent transmission, to minimize reflections of the radio signals, based on the information about the radio output power in the data packet (3) and the determined packet error rate, and to calculate a travel distance for said data packet (3) by using a second section (2) of the data packet (3).

10. The node (1a; 1b) according to claim 9 adapted to perform the method of any one of claims 2-8.

11. The node (1a) according to any one of claims 9 or 10, wherein the node (1a) is adapted to transmit a data packet (3) to a device (1c), start a timer based on any one of the trailing edge of the data packet (3), the last 50% of the data packet (3),the last 75% of the data packet (3), a selected stop bit within the last 75% of the data packet (3), and a signal indicating the end of packet transmission, receive the data packet (3) from the device (1c), bias the radio receiver based on a first section (1) of the data packet (3), and stop a timer based on a second section (2) of the data packet (3), wherein the second section (2) is any one of the trailing edge of the data packet (3), the last 50% of the data packet (3), the last 75% of the data packet (3), a selected stop bit within the last 75% of the data packet (3), and a signal indicating the end of packet reception, and wherein the node further is adapted to calculate the distance between the node (1a) and the device (1c).

## Patentansprüche

1. Verfahren zum Bestimmen einer Entfernung mit Sub-GHz-Funksignalen, das die folgenden Schritte umfasst:
- Empfangen mindestens eines Datenpakets (3) in einem Funkempfänger, wobei das Datenpaket (3) Informationen über eine Funkausgangsleistung umfasst, die beim Übertragen des Datenpakets (3) verwendet wurde, wobei das Datenpaket (3) eine bekannte Struktur aufweist,
- Ausrichten des Funkempfängers unter Verwendung eines ersten Abschnitts (1) des Datenpakets (3),
- Vergleichen des Datenpakets (3) mit der bekannten Struktur des Datenpakets (3),
- Bestimmen einer Paketfehlerrate basierend auf der Differenz zwischen dem empfangenen Datenpaket (3) und der bekannten Struktur des Datenpakets (3),
- Anpassen der Funkausgangsleistung für eine nachfolgende Übertragung zum Minimieren von Reflexionen der Funksignale basierend auf den Informationen über die Funkausgangsleistung in dem Datenpaket (3) und der bestimmten Paketfehlerrate, und
- Durchführen einer Entfernungsberechnung basierend auf einem zweiten Abschnitt (2) des Datenpakets (3).

2. Verfahren nach Anspruch 1, wobei die Signalstärke des Datenpakets (3) beim Empfang gemessen wird.

3. Verfahren nach einem der Ansprüche 1-2, wobei die Funkausgangsleistung zum Übertragen des Datenpakets (3) dynamisch angepasst wird, um eine Paketfehlerrate zwischen 0% und 10% zu erreichen.

4. Verfahren nach einem der Ansprüche 1-3, wobei eine Verstärkungssteuerung in einem rauscharmen Verstärker auf das Funksignal des Datenpakets (3) angewendet wird.

5. Verfahren nach einem der Ansprüche 1-4, wobei das Datenpaket (3) als ein Funksignal bei einer Frequenz zwischen 300 MHz und 1000 MHz empfangen wird.

6. Verfahren nach einem der Ansprüche 1-5, wobei das Datenpaket (3) eine Variable umfasst, die einen Zählerwert angibt, und der Zählerwert ein inkrementeller Wert ist, der die Übertragungsreihenfolge mehrerer Datenpakete (3) angibt.

7. Verfahren nach einem der Ansprüche 1-6, wobei das Verfahren weiter den folgenden Schritt umfasst:
- Anpassen der Bitrate, wenn die Funkausgangsleistung nahe einem vorgegebenen Schwellenwert ist.

8. Verfahren nach einem der Ansprüche 1-7, wobei der zweite Abschnitt (2) des Datenpakets (3) eines der Hinterkante des Datenpakets (3), der letzten 50% des Datenpakets (3), der letzten 75% des Datenpakets (3), eines ausgewählten Stoppbits innerhalb der letzten 50% des Datenpakets (3), eines ausgewählten Stoppbits innerhalb der letzten 75% des Datenpakets (3) oder eines Signals, das das Ende des Paketempfangs angibt, ist.

9. Knoten (1a; 1b), der einen Funkempfänger umfasst, der dazu geeignet ist, ein Datenpaket (3) zu empfangen, das Informationen über eine Funkausgangsleistung enthält, die beim Übertragen des Datenpakets (3) verwendet wurde, wobei das Datenpaket (3) eine bekannte Struktur aufweist und als Sub-GHz-Funksignale empfangen wird, wobei der Knoten dazu geeignet ist, den Funkempfänger unter Verwendung eines ersten Abschnitts (1) des Datenpakets (3) auszurichten, das Datenpaket (3) mit der bekannten Struktur des Datenpakets (3) zu vergleichen, eine Paketfehlerrate basierend auf der Differenz zwischen dem empfangenen Datenpaket (3) und der bekannten Struktur des Datenpakets (3) zu bestimmen und die Funkausgangsleistung für eine nachfolgende Übertragung zum Minimieren von Reflexionen der Funksignale basierend auf den Informationen über die Funkausgangsleistung in dem Datenpaket (3) und der bestimmten Paketfehlerrate anzupassen, und eine Übertragungsentfernung für das Datenpaket (3) unter Verwendung eines zweiten Abschnitts (2) des Datenpakets (3) zu berechnen.

10. Knoten (1a; 1b) nach Anspruch 9, der dazu geeignet ist, das Verfahren nach einem der Ansprüche 2-8 durchzuführen.

11. Knoten (1a) nach einem der Ansprüche 9 oder 10, wobei der Knoten (1a) dazu geeignet ist, ein Datenpaket (3) an eine Vorrichtung (1c) zu übertragen, einen Zeitgeber basierend auf einem von der Hinterkante des Datenpakets (3), den letzten 50% des Datenpakets (3), den letzten 75% des Datenpakets (3), einem ausgewählten Stoppbit innerhalb der letzten 75% des Datenpakets (3) oder einem Signal, das das Ende der Paketübertragung angibt, zu starten, das Datenpaket (3) von der Vorrichtung (1c) zu empfangen, den Funkempfänger basierend auf einem ersten Abschnitt (1) des Datenpakets (3) auszurichten und einen Zeitgeber basierend auf einem zweiten Abschnitt (2) des Datenpakets (3) zu stoppen, wobei der zweite Abschnitt (2) eines der Hinterkante des Datenpakets (3), der letzten 50% des Datenpakets (3), der letzten 75% des Datenpakets (3), eines ausgewählten Stoppbits innerhalb der letzten 75% des Datenpakets (3) oder eines Signals, das das Ende des Paketempfangs angibt, ist, und wobei der Knoten weiter dazu geeignet ist, die Entfernung zwischen dem Knoten (1a) und der Vorrichtung (1c) zu berechnen.

## Revendications

1. Procédé de détermination d'une distance avec des signaux radio sub-GHz comprenant les étapes suivantes :
- la réception d'au moins un paquet de données (3) dans un récepteur radio, dans lequel le paquet de données (3) comprend des informations sur une puissance de sortie radio utilisée lorsque le paquet de données (3) a été transmis, dans lequel le paquet de données (3) présente une structure connue,
- la polarisation du récepteur radio à l'aide d'une première section (1) du paquet de données (3),
- la comparaison du paquet de données (3) à la structure connue dudit paquet de données (3),
- la détermination d'un taux d'erreur de paquet sur la base de la différence entre le paquet de données (3) reçu et la structure connue dudit paquet de données (3),
- l'ajustement de la puissance de sortie radio pour une transmission ultérieure, afin de réduire au minimum des réflexions des signaux radio, sur la base des informations sur la puissance de sortie radio dans le paquet de données (3) et du taux d'erreur de paquet déterminé, et
- la réalisation d'un calcul de distance sur la base d'une seconde section (2) du paquet de données (3).

2. Procédé selon la revendication 1, dans lequel la force de signal dudit paquet de données (3) est mesurée à la réception.

3. Procédé selon l'une quelconque des revendications 1-2, dans lequel la puissance de sortie radio pour transmettre le paquet de données (3) est ajustée dynamiquement pour obtenir un taux d'erreur de paquet compris entre 0 % et 10 %.

4. Procédé selon l'une quelconque des revendications 1-3, dans lequel une commande de gain dans un amplificateur à faible bruit est appliqué au signal radio du paquet de données (3).

5. Procédé selon l'une quelconque des revendications 1-4, dans lequel le paquet de données (3) est reçu sous forme de signal radio à une fréquence comprise entre 300 MHz et 1 000 MHz.

6. Procédé selon l'une quelconque des revendications 1-5, dans lequel le paquet de données (3) comprend une variable indiquant une valeur de compteur et ladite valeur de compteur est une valeur incrémentielle indiquant l'ordre de transmission de multiples paquets de données (3).

7. Procédé selon l'une quelconque des revendications 1-6, dans lequel le procédé comprend en outre l'étape suivante :
- l'ajustement du débit binaire si la puissance de sortie radio est proche d'une valeur seuil prédéterminée.

8. Procédé selon l'une quelconque des revendications 1-7, dans lequel la seconde section (2) du paquet de données (3) est l'un quelconque parmi le bord arrière du paquet de données (3), les derniers 50 % du paquet de données (3), les derniers 75 % du paquet de données (3), un bit d'arrêt sélectionné dans les derniers 50 % du paquet de données (3), un bit d'arrêt sélectionné dans les derniers 75 % du paquet de données (3), et un signal indiquant la fin de la réception de paquet.

9. Noeud (1a ; 1b) comprenant un récepteur radio conçu pour recevoir un paquet de données (3) contenant des informations sur une puissance de sortie radio utilisée lorsque le paquet de données (3) a été transmis, dans lequel le paquet de données (3) présente une structure connue et est reçu sous forme de signaux radio sub-GHz, dans lequel le nœud est conçu pour polariser le récepteur radio à l'aide d'une première section (1) du paquet de données (3), comparer le paquet de données (3) à la structure connue dudit paquet de données (3), déterminer un taux d'erreur de paquet sur la base de la différence entre le paquet de données (3) reçu et la structure connue dudit paquet de données (3) et ajuster la puissance de sortie radio pour une transmission ultérieure, pour réduire au minimum des réflexions des signaux radio, sur la base des informations sur la puissance de sortie radio dans le paquet de données (3) et du taux d'erreur de paquet déterminé, et calculer une distance de déplacement pour ledit paquet de données (3) à l'aide d'une seconde section (2) du paquet de données (3).

10. Nœud (1a ; 1b) selon la revendication 9 est conçu pour mettre en œuvre le procédé selon l'une quelconque des revendications 2-8.

11. Nœud (1a) selon l'une quelconque des revendications 9 et 10, dans lequel le nœud (1a) est conçu pour transmettre un paquet de données (3) à un dispositif (1c), démarrer un temporisateur sur la base de l'un quelconque parmi le bord arrière du paquet de données (3), les derniers 50 % du paquet de données (3), les derniers 75 % du paquet de données (3), un bit d'arrêt sélectionné dans les derniers 75 % du paquet de données (3), et un signal indiquant la fin de la transmission de paquet, recevoir le paquet de données (3) du dispositif (1c), polariser le récepteur radio sur la base d'une première section (1) du paquet de données (3), et arrêter un temporisateur sur la base d'une seconde section (2) du paquet de données (3), dans lequel la seconde section (2) est l'un quelconque parmi le bord arrière du paquet de données (3), les derniers 50 % du paquet de données (3), les derniers 75 % du paquet de données (3), un bit d'arrêt sélectionné dans les derniers 75 % du paquet de données (3), et un signal indiquant la fin de la réception de paquet, et dans lequel le nœud est en outre conçu pour calculer la distance entre le nœud (1a) et le dispositif (1c).
